**Europäisches Patentamt**

**European Patent Office**

**Office européen des brevets**

(19)

(11) Veröffentlichungsnummer : **0 391 019 B1**

(12) # EUROPÄISCHE PATENTSCHRIFT

(45) Veröffentlichungstag der Patentschrift :
**13.05.92 Patentblatt 92/20**

(51) Int. Cl.$^5$ : **F02M 35/024, B01D 46/10**

(21) Anmeldenummer : **90100569.4**

(22) Anmeldetag : **12.01.90**

(54) Ansaugluftfilter für Brennkraftmaschinen.

(30) Priorität : **06.04.89 DE 3911153**

(43) Veröffentlichungstag der Anmeldung :
**10.10.90 Patentblatt 90/41**

(45) Bekanntmachung des Hinweises auf die
Patenterteilung :
**13.05.92 Patentblatt 92/20**

(84) Benannte Vertragsstaaten :
**AT DE ES FR GB IT SE**

(56) Entgegenhaltungen :
**EP-A- 0 070 636**
**EP-A- 0 334 719**
**DE-A- 2 512 724**
**FR-A- 2 034 160**
**FR-A- 2 188 064**

(73) Patentinhaber : **FILTERWERK MANN &
HUMMEL GMBH
Hindenburgstrasse 37- 45 Postfach 409
W-7140 Ludwigsburg (DE)**

(72) Erfinder : **Klotz, Arthur
Ludwigsburger Strasse 45
W-7148 Remseck 5 (DE)**
Erfinder : **Kupke, Peter
Zeppelinstrasse 12
W-7141 Steinheim (DE)**
Erfinder : **Leipelt, Rudolf
Fohlenbergstrasse 7/1
W-7142 Marbach (DE)**

(74) Vertreter : **Voth, Gerhard, Dipl.-Ing.
FILTERWERK MANN + HUMMEL GMBH
Postfach 409
W-7140 Ludwigsburg (DE)**

EP 0 391 019 B1

## Beschreibung

Die Erfindung bezieht sich auf ein Ansaugluftfilter für Brennkraftmaschinen nach dem Oberbegriff des Anspruchs 1.

Bei einem derartigen aus der DE-PS 25 12 724 bekannten Filter hat der Filtereinsatz selbst auf beiden Seiten vorgesehene schräge Seitenteile, die sich an den geneigten Absätzen der Seitenteile des Filtergehäuses abstützen. Nachteilig ist dabei, daß beim Aufbringen der Dichtungspressung die Dichtung selbst und der Dichtsitz unter Erzeugung von Abrieb seitlich gegeneinander verschoben werden. Dies birgt die Gefahr in sich, daß die Dichtung beschädigt wird oder sich vom Filtereinsatz löst.

Dementsprechend liegt der Erfindung die Aufgabe zugrunde, mit einfachen konstruktiven Mitteln eine einwandfreie Abdichtung unter Vermeidung eines seitlichen Verschiebens des Filtereinsatz-Dichtrings gegenüber der Gehäuse-Dichtfläche zu erzielen.

Diese Aufgabe wird bei einem Ansaugluftfilter für Brennkraftmaschinen nach dem Oberbegriff des Anspruchs 1 erfindungsgemäß dadurch gelöst, daß ein stirnseitig im wesentlichen offener Rahmen den Filtereinsatz auswechselbar aufnimmt und ein in der Einschubrichtung des Filtereinsatzes bis zu einer arretierbaren Schließstellung verschiebbares Verschlußteil aufweist, das für das Aufbringen der Dichtungspressung mit Widerlagern zum Abstützen einerseits an den geneigten Absätzen der Seitenteile des Filtergehäuses und andererseits am Rahmen versehen ist.

Nunmehr wird der Filtereinsatz ohne seitliches Verschieben durch das Verschlußteil über den Rahmen zur stirnseitigen Abdichtung an den Absatz des Filtergehäuses angedrückt. Nachdem der Rahmen und das Verschlußteil selbst nicht irgendwo abdichtend anliegen müssen, können Werkstoffe verwendet werden, die ein gutes Gleiten des Verschlußteils gegenüber dem Rahmen wie auch gegenüber dem Filtergehäuse ohne Schwierigkeiten ermöglichen.

Erfindungsgemäß ergibt sich eine besonders einfache Konstruktion dadurch, daß das Verschlußteil zwei den Rahmen seitlich umfassende Schieberkeile aufweist, die durch einen Deckel fest miteinander verbunden sind.

Nach einem weiteren Vorschlag der Erfindung sind die Schieberkeile und die benachbarten Rahmenseitenteile über sich in der Einschubrichtung des Filtereinsatzes erstreckende Langlöcher und in diese eingreifende Vorsprünge begrenzt längs verschieblich miteinander verbunden.

Damit Rahmen und Verschlußteil in Montagestellung beieinander bleiben, sind die Vorsprünge mit Rastnasen versehen und in die Langlöcher eingerastet.

Nachfolgend wird ein Ausführungsbeispiel der Erfindung anhand der Zeichnung näher erläutert. Es zeigen:
Figur 1 einen Längsschnitt durch ein Ansaugluftfilter mit in der Schließstellung abgedichtet angedrücktem Filtereinsatz
Figur 2 den Ansaugluftfilter der Figur 1 im Querschnitt in einer anderen Stellung der Verschließvorrichtung
Figur 3 einen Teilschnitt entsprechend der Linie 3 - 3 der Figur 1
Figur 4 einen Teilquerschnitt durch das Ansaugluftfilter entsprechend Linie 4 - 4 der Figur 1.

Das Ansaugluftfilter 10 hat ein Filtergehäuse 11 aus Kunststoff, in das von unten ein Ansaugrohr 12 einmündet und aus dem nach oben ein Reinluftrohr 13 ausmündet.

Ein rechteckiger Filtereinsatz 20 besteht aus einem zickzackförmig gefalteten Filterpapierstreifen 21, der am Umfang mit einer Dichtleiste 22 versehen ist. An den Schnittkanten des Filterpapierstreifens 21 sind jeweils zwei benachbarte Flächen miteinander verklebt, so daß sich zur Reinluftseite hin offene Filtertaschen ergeben. Der Filtereinsatz 20 trennt in dem Filtergehäuse 11 einen Reinluftraum 14 von einem Rohluftraum 44 ab.

Der Filtereinsatz 20 ist auswechselbar in einen stirnseitig im wesentlichen offenen Rahmen 30 eingesetzt, der gleichfalls aus Kunststoff besteht Seine Seitenteile 31, 32 und 33 weisen einen in gleicher Höhe angeordneten Absatz 35 auf, der gegen die Dichtleiste 22 des Filtereinsatzes 20 anliegt. In noch zu beschreibender Weise wird die Dichtleiste 22 vom Rahmen 30 gegen einen Absatz 15 des Filtergehäuses 11 abgedichtet angedrückt.

Die sich in Einschubrichtung 23 erstreckenden Seitenteile 32 des Rahmens 30 sind mit Vorsprüngen 36 versehen, die Rastnocken 37 aufweisen.

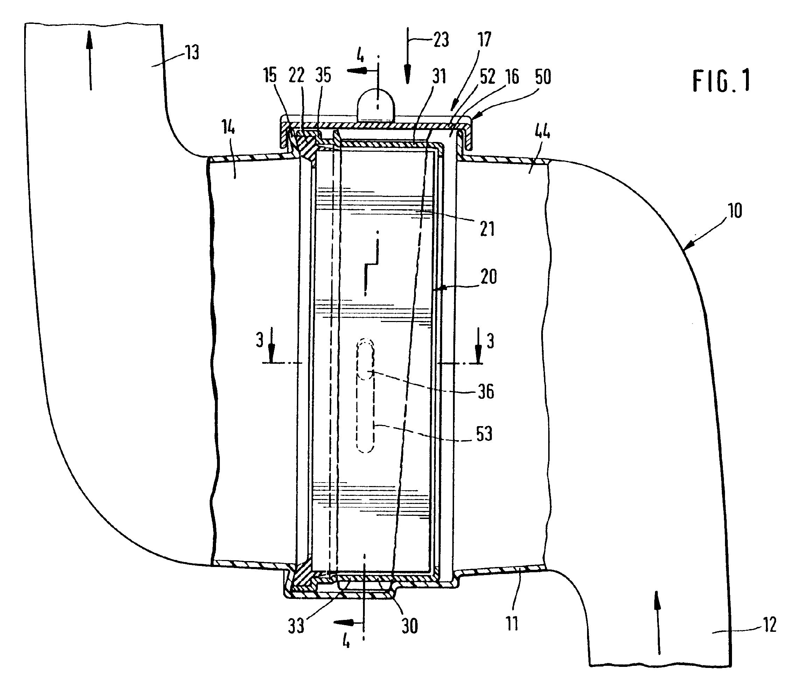

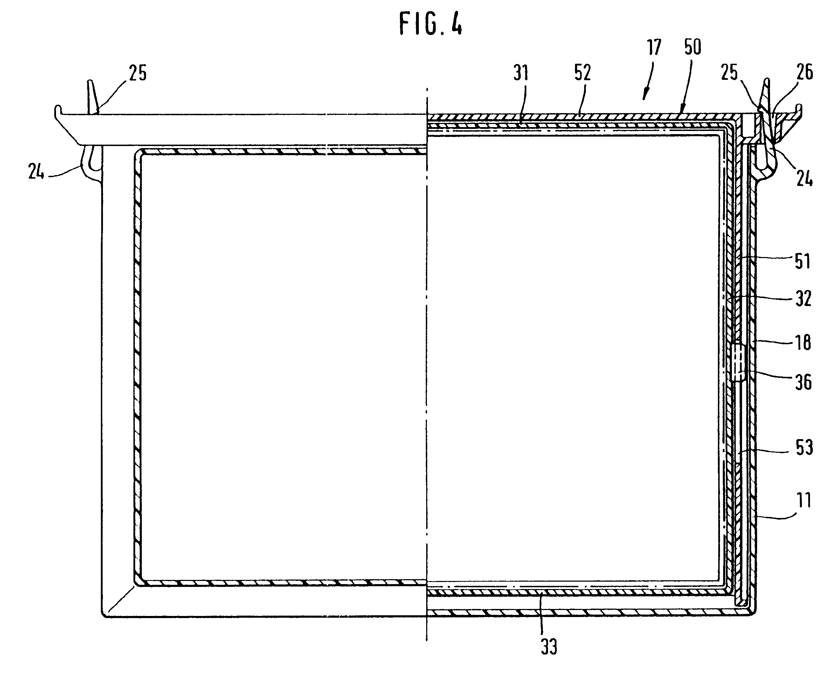

Ein Verschlußteil 50 hat zwei den Rahmen 30 seitlich umfassende Schieberkeile 51, die durch einen Deckel 52 fest miteinander verbunden sind. In Schließstellung (Figuren 1 und 4) verschließt der Deckel 52 eine Öffnung 16 an der Schmalseite 17 des Fitergehäuses 11. Durch die Öffnung 16 kann der Filtereinsatz 20 mit dem Rahmen 30 ein- und ausgebaut werden.

Jeder Schieberkeil 51 ist mit einem Langloch 53 versehen, das sich in Einschubrichtung 23 des Filtereinsatzes 20 erstreckt. In die Langlöcher 53 greifen die Vorsprünge 36 der Schieberkeile 51 ein, wobei die Rastnocken 37 hinter die Wandung der Schieberkeile greifen. Rahmen 30 und Verschlußteil 50 mit den Schieberkeilen 51 sind somit begrenzt längsverschieblich miteinander verbunden.

Seitenteile 18 des Filtergehäuses 11 weisen Absätze 19 auf, die in Einschubrichtung 23 auf den Filtereinsatz 20 zu geneigt sind Die Schieberkeile 51 stützen sich einerseits mit ihren als Widerlager 54 ausgebildeten Schultern an den Absätzen 19 des Filtergehäuses 11 und andererseits mit ihren als Widerlager 55 ausgebildeten Schultern an vorspringenden Leisten 38 der Seitenteile 32 des Rahmens 30 ab.

Am Filtergehäuse 11 sind federnde Zungen 24 mit Rastnasen 25 angeordnet. In Schließstellung greifen die Zungen 24 durch Öffnungen 26 im Deckel 52 des Verschlußteils 50, und die Rastnasen 25 halten das Verschlußteil 50 in dieser Stellung fest.

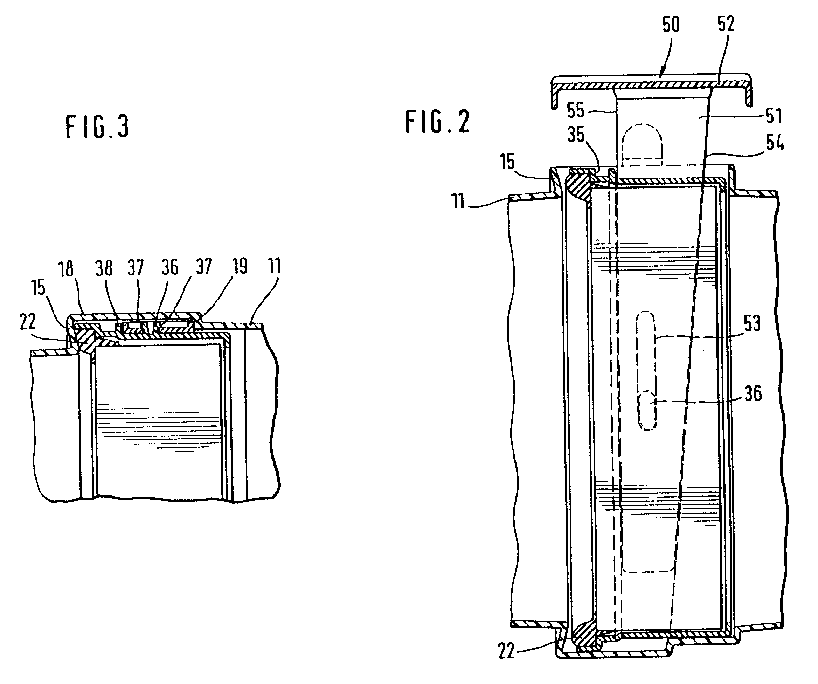

Zum Einsetzen eines Filtereinsatzes werden die Zungen 24 des Filtergehäuses 11 seitlich weggedrückt, sodaß die Rastnasen 25 den Deckel 52 freigeben. Das Verschlußteil kann nun aus dem Filtergehäuse 11 herausgezogen werden. In der Öffnungsstellung entsprechend Figur 2 befinden sich Filtereinsatz 20 und Rahmen 30 noch im Filtergehäuse 11, während das Verschlußteil 50 schon etwas herausgezogen ist. Die Dichtleiste 22 hat sich ein wenig von dem Absatz 19 des Filtergehäuses 11 abgehoben.

Mit weiterem Herausziehen des Verschlußteils 50 wird über die Langlöcher 53 und die in diese eingreifenden Vorsprünge 36 auch der Rahmen 30 über die Öffnung 16 aus dem Filtergehäuse 11 herausbewegt.

Nun kann ein Filtereinsatz 20 in den Rahmen 30 so eingefügt werden, daß die Dichtleiste 22 gegen den Absatz 35 des Rahmens 30 anliegt. Filtereinsatz 20 zusammen mit Rahmen 30 und Verschlußteil 50 werden nun in umgekehrter Reihenfolge wieder in das Filtergehäuse 11 hineingeschoben, bis schließlich die in den Figuren 1 und 4 dargestllte Schließstellung erreicht ist. In dieser Schließstellung drücken die Schieberkeile 51, die sich mit den Widerlagern 54 an den Absätzen 19 der Seitenteile 18 des Filtergehäuses abstützen, mit den Widerlagern 55 gegen die Leiste 38 des Rahmens 30, der seinerseits mit dem Absatz 35 die Dichtleiste 22 gegen den Absatz 15 des Filtergehäuses 11 andrückt und so die notwendige Dichtungspressung herstellt.

Die Rohluft tritt in Pfeilrichtung durch das Ansaugrohr 12 in das Filtergehäuse 11 ein, durchquert den Filtereinsatz 20 vom Rohluftraum 44 zum Reinluftraum 14 und verläßt das Filtergehäuse durch das Reinluftrohr 13 zur Brennkraftmaschine.

Bezugszeichenliste

10 Ansaugluftfilter
11 Filtergehäuse
12 Ansaugrohr
13 Reinluftrohr
14 Reinluftraum
15 Absatz
16 Öffnung
17 Schmalseite
18 Seitenteil
19 Absatz
20 Filtereinsatz
21 Filterpapierstreifen
22 Dichtleiste
23 Einschubrichtung
24 Zunge
25 Rastnase
26 Öffnung
30 Rahmen
31 Seitenteil
32 Seitenteil
33 Seitenteil
35 Absatz
36 Vorsprung
37 Rastnocken
38 Leiste
44 Rohluftraum
50 Verschlußteil
51 Schieberkeil
52 Deckel
53 Langloch
54 Widerlager
55 Widerlager

**Patentansprüche**

1. Ansaugluftfilter für Brennkraftmaschinen mit einem flachen, auswechselbaren, im Betrieb quer durchströmten Filtereinsatz, der eine am Umfang angeordnete Dichtleiste zur stirnseitigen Abdichtung an einem Absatz des Filtergehäuses aufweist und über eine Schmalseite in das Filtergehäuse einschiebbar ist, wobei die Dichtungspressung über sich in Einschubrichtung auf den Filtereinsatz zu geneigte Absätze an den Seitenteilen des Filtergehäuses erfolgt, wobei ein stirnseitig im wesentlichen offener Rahmen den Filtereinsatz auswechselbar aufnimmt, dadurch gekennzeichnet, daß ein in der Einschubrichtung (23) des Filtereinsatzes (20) bis zu einer arretierbaren Schließstellung verschiebbares Verschlußteil (50) vorgesehen ist, wobei das Verschlußteil und der Rahmen miteinander in der Einschubrichtung (23) des Filtereinsatzes längsverschieblich verbunden sind, und daß das Verschlußteil für das Aufbringen der Dichtungspressung mit Widerlagern (54, 55) zum Abstützen einerseits an den geneigten Absätzen (19) der Seitenteile (32) des Filtergehäuses (11) und andererseits am Rahmen (30) versehen ist.

2. Ansaugluftfilter nach Anspruch 1, dadurch gekennzeichnet, daß das Verschlußteil (50) zwei den Rahmen (30) seitlich umfassende Schieberkeile (51) aufweist, die durch einen Deckel (52) fest miteinander verbunden sind.

3. Ansaugluftfilter nach Anspruch 2, dadurch gekennzeichnet, daß die Schieberkeile (51) und die benachbarten Rahmenseitenteile (32) über sich in der Einschubrichtung (23) des Filtereinsaztes (20) erstreckende Langlöcher (53) und in diese eingreifende Vorsprünge (36) begrenzt längs verschieblich miteinander verbunden sind.

4. Ansaugluftfilter nach Anspruch 3, dadurch gekennzeichnet, daß die Vorsprünge (36) mit Rastnocken (37) versehen und in die Langlöcher (53) eingerastet sind.

**Claims**

1. Air inlet filter for internal combustion engines, including a flat, interchangeable filter insert which, in use, has air flowing traversely therethrough, and includes a sealing strip, which is disposed on the periphery, for sealing the end face of a shoulder portion of the filter housing, with a narrow end of said sealing strip being insertable into the filter housing, the sealing pressure being effected via shoulder portions, which are inclined towards the filter insert in the insert direction and are situated on the lateral portions of the filter housing, and a frame which is substantially open at its end face and accommodates the filter insert whilst permitting replacement, characterised in that a closure member (50) is provided, which is displaceable in the insert direction (23) of the filter insert (20) as far as an arrested closed position, the closure member and the frame being interconnected so as to be longitudinally displaceable in the insert direction (23) of the filter insert, and in that, for the application of the sealing pressure, the closure member is provided with supports (54, 55) for support, on the one hand, on the inclined shoulder portions (19) of the lateral portions (32) of the filter housing (11) and for support, on the other hand, on the frame (30).

2. Air inlet filter according to claim 1, characterised in that the closure member (50) includes two wedge-shaped sliders (51), which laterally enclose the frame (30) and are firmly interconnected by means of a cover (52).

3. Air inlet filter according to claim 2, characterised in that the wedge-shaped sliders (51) and the adjacent lateral portions (32) of the frame are interconnected, so as to be longitudinally displaceable to a limited extent, by means of slots (53), which extend in the insert direction (23) of the filter insert (20), and by means of projection members (36), which engage in said slots.

4. Air inlet filter according to claim 3, characterised in that the projection members (36) are provided with locking cams (37) and are locked into the slots (53).

**Revendications**

1. Filtre d'aspiration d'air pour moteur à combustion interne possédant une cartouche filtrante plate, interchangeable, parcourue transversalement durant la marche, qui comporte une nervure d'étanchéité située sur son pourtour pour assurer une étanchéité frontale contre un rebord du boîtier de filtre et qui peut être insérée dans le boîtier de filtre par un côté étroit, filtre dans lequel le serrage d'étanchéité est assuré par des rebords s'appuyant contre les parties latérales du boîtier de filtre, inclinés dans le sens d'insertion de la cartouche filtrante et dans lequel un cadre essentiellement ouvert frontalement reçoit la cartouche filtrante avec interchangeabilité possible de celle-ci, filtre d'aspiration caractérisé en ce qu'une pièce de fermeture (50) mobile dans le sens d'insertion (23) de la cartouche filtrante (20) jusqu'à une position terminale de blocage est prévue, la pièce de fermeture et le cadre se trouvant alors réunis ensemble avec déplacement longitudinal possible dans le sens d'insertion (23) de la cartouche filtrante, et en ce que la pièce de fermeture est munie de butées (54, 55) pour assurer le serrage d'étanchéité, butées destinées à appuyer d'une part contre les rebords repliés (19) des parties latérales (32) du boîtier de filtre (11) et d'autre part contre le cadre (30).

2. Filtre d'aspiration d'air selon la revendication 1, caractérisé en ce que la pièce de fermeture (50) comprend deux coins à coulisse (51) enserrant latéralement le cadre (30) et qui sont liés solidairement l'un à l'autre par un couvercle (52).

3. Filtre d'aspiration d'air selon la revendication 2, caractérisé en ce que les coins à coulisse (51) et les parties latérales du cadre voisines (32) sont reliés les uns aux autres par des tous oblongs (53) s'étendant dans le sens d'insertion (23) de la cartouche de filtre (20) et sont mobiles longitudinalement les uns par rapport aux autres avec une limitation exercée par des pièces en saillies (36) engagées dans ces trous.

4. Filtre d'aspiration d'air selon la revendication 3, caractérisé en ce que les pièces en saillies (36) sont munies d'ergots d'enclenchement (37) et sont enclenchées dans les trous oblongs (53).

FIG.1

FIG.2

FIG.3

# FIG. 4

EP 0 391 019 B1